## Europäisches Patentamt
## European Patent Office
## Office européen des brevets

(11) Numéro de publication: **0 194 196**
**B1**

(12) **FASCICULE DE BREVET EUROPEEN**

(45) Date de publication du fascicule du brevet:
31.05.89

(51) Int. Cl.⁴: **G02B 27/00**

(21) Numéro de dépôt: **86400405.6**

(22) Date de dépôt: **25.02.86**

(54) **Système aéroporté de visualisation d'images collimatées.**

(30) Priorité: **01.03.85 FR 8503083**

(43) Date de publication de la demande:
**10.09.86 Bulletin 86/37**

(45) Mention de la délivrance du brevet:
**31.05.89 Bulletin 89/22**

(84) Etats contractants désignés:
**DE GB SE**

(56) Documents cités:
**DE-A- 2 425 914**
**DE-A- 2 521 874**
**DE-A- 3 103 045**
**US-A- 4 193 666**
**US-A- 4 264 134**

(73) Titulaire: **THOMSON-CSF, 51, Esplanade du Général de Gaulle, F-92800 Puteaux(FR)**

(72) Inventeur: **Gerbe, Jean-Pierre, THOMSON-CSF SCPI 19, avenue de Messine, F-75008 Paris(FR)**

(74) Mandataire: **Trocellier, Roger et al, THOMSON-CSF SCPI, F-92045 PARIS LA DEFENSE CEDEX 67(FR)**

ACTORUM AG

## Description

La présente invention concerne un système aéroporté de visualisation d'images collimatées.

Les équipements aéroportés nécessitent de plus en plus de multiples dispositifs de visualisation. Certains d'entre eux équipent la planche de bord, ce sont des dispositifs de visualisation tête basse (Head-Down-Display en terminologie anglo-saxonne). D'autres constituent des collimateurs tête haute (Head-Up-Display) pour superposer une image collimatée avec la vision du paysage extérieur.

Il est connu (voir US-A 4 264 134) d'utiliser conjointement un collimateur tête haute avec un dispositif de visualisation tête basse également agencé pour former une image collimatée, les deux dispositifs étant positionnés en sorte que les images collimatées soient vues en continuité selon deux champs successifs et ne nécessitent pas une accommodation de l'oeil pour le pilote en passant de l'une à l'autre. Il est connu aussi d'utiliser ce montage avec un deuxième dispositif de visualisation tête basse, non collimatée.

L'invention se rapporte à un système de visualisation d'images collimatées, destiné principalement à équiper la planche de bord d'un avion d'armes. Il est destiné à fournir au pilote des images placées juste sous la vision du paysage extérieur à l'avion. Plus précisément il est destiné à présenter deux types d'images. Une première image, de champ étendu, correspondant à une image vidéo à haute définition. Cette image peut être fournie par un capteur du type caméra de télévision, de jour ou de nuit, ou d'un dispositif appelé FLIR de "Forward Looking Infra-Red"; elle peut correspondre au paysage extérieur. Une deuxième image en vidéo synthétique permettant de présenter en couleur la symbologie d'une visualisation tête basse conventionnelle mais avec une très haute résolution.

L'une ou l'autre de ces images peut être sélectionnée par le pilote en fonction des besoins et des différentes phases de vol. On peut également envisager d'observer ces images en superposition.

La première image doit être réalisée en monochrome, la présentation en couleur ne pouvant fournir une résolution suffisante. Un capteur monochrome peut fournir une image composée de 875 ou 1000 lignes et de 1000 points par ligne.

A contrario, l'obtention d'une deuxième image cette fois de nature synthétique à haute résolution nécessite d'utiliser un tube cathodique couleur de taille importante car les tubes couleur de petites dimensions ne donnent pas une résolution suffisante. Un tube à masque (dit Shadowmask en anglais) fournit de l'ordre de 300 à 400 points par ligne, au pas de 0,2 mm.

Pour les représentations fines exigées de la voie monochrome et de la voie couleur on utilise des générateurs d'images lumineuses constitués de tubes cathodiques, respectivement un tube noir et blanc et pour l'autre voie un tube trichrome à masque, par exemple. Compte tenu du volume pris par ces éléments, leur intégration et leur montage sur la planche de bord n'est pas facile. Ce montage est encore rendu plus complexe si l'on adjoint encore une voie collimatée tête haute pour laquelle le générateur d'image lumineuse est également un tube monté sur une planche de bord et si, en outre, on désire produire des images collimatées pour les voies monochrome et couleur des dispositifs de visualisation tête basse, en sorte d'éviter tout accommodation de l'œil de l'observateur.

Le but de l'invention est de remédier à ces difficultés en proposant une solution qui permet de résoudre toutes ces contraintes.

Selon l'invention, il est proposé de réaliser un système aéroporté de visualisation d'images comportant, un premier et un deuxième dispositifs de visualisation tête basse équipant la planche de bord pour visualiser une première et une deuxième images à partir respectivement d'un premier et d'un deuxième générateurs d'images lumineuses, un dispositif de visualisation tête haute dont le champ de visualisation tête haute se trouve juxtaposé à celui commun de visualisation tête basse desdites première et deuxième images, un premier des dispositifs tête basse étant doté d'une optique collimatrice pour collimater la première image, caractérisé en ce que l'optique collimatrice sert également à collimater la deuxième image moyennant l'utilisation d'un objectif optique relais qui transporte la deuxième image et en forme une image intermédiaire, une optique de combinaison du type miroir partiellement transparent étant interposé sur les trajets optiques entre la première image et l'optique et entre l'image intermédiaire et l'optique en sorte que ces deux images sont vues chacune au foyer de l'optique collimatrice, ledit premier générateur produisant une image vidéofréquence à haute définition et le deuxième générateur produisant une image synthétique de symboles à haute résolution.

Les particularités et avantages de la présente invention apparaîtront dans la description qui suit donnée à titre d'exemple non limitatif, à l'aide des figures annexées qui représentent:

– Fig. 1, un schéma d'un système de visualisation selon l'invention;

– Fig. 2, un exemple de réalisation du système selon la figure 1.

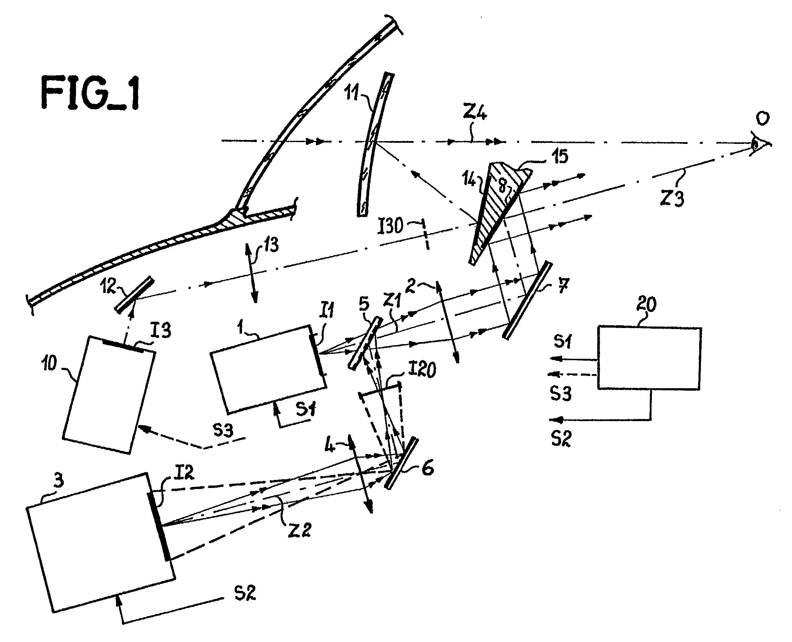

En se reportant à la figure 1, on distingue le premier dispositif de visée tête basse qui est formé par un premier générateur d'image lumineuse 1 associé à une optique collimatrice 2 pour former une image à l'infini de l'image I1 fournie par ce générateur. Pour obtenir une image à haute définiton, le générateur 1 est un tube cathodique monochrome et l'image I1 est celle formée sur l'écran plan, ou sensiblement plan du tube cathodique.

Le deuxième dispositif de visée est formé similairement par un deuxième générateur d'image lumineuse 3 tel un tube couleur à masque qui donne une image en couleur de la vidéo synthétique de symboles qui doit être visualisée.

Pour collimater cette deuxième image I2, également formée sur l'écran du tube cathodique couleur 3, on utilise un objectif relais 4 qui transporte l'image I2 pour en former une image intermédiaire I20 à proximité de l'optique collimatrice 2. En complément, une optique de combinaison 5 est interposée sur les trajets optiques entre le plan image I1 et l'objectif 2 et entre l'image intermédiaire I20 et ce même objectif, l'ensemble étant agencé en sorte que ces deux images I1 et I20 soient vues de l'objectif 2 comme étant positionnées en son foyer.

En raisonnant simplement avec une optique de combinaison constituée par un miroir partiellement réfléchissant 5, et en considérant les images I1 et I2 planes et l'image I20 formée dans le plan symétrique de celui I1 vu à travers le miroir 5, le plan I1 correspondant au plan focal de l'objectif 2 selon l'axe Z1 de cet optique, on se rend compte que l'objectif relais 4 doit être déterminé pour effectuer le transport d'image entre le plan I2 et le plan image correspondant à I20. La distance du plan image I20 à l'optique 2 par réflexion sur le miroir 5 correspond également à la distance focale de l'optique 2.

Les autres éléments optiques représentés sont des éléments complémentaires permettant des renvois d'axe optique. Ils consistent en un premier miroir plan réfléchissant 6 qui renvoie l'axe optique Z2 du tube couleur 3 et de l'optique relais 4 vers l'optique de combinaison 5 pour y être réfléchi ensuite selon la direction Z1 de la voie monochrome. Les directions Z1 et Z2 peuvent être parallèles comme figurées ou, dans la pratique, peu inclinées entre elles. L'ensemble des miroirs plans réfléchissants 7 et 8 est destiné en sortie à reporter vers le haut l'axe Z1, avec une orientation finale Z3 allant en direction d'un point d'observation O. L'ensemble 7, 8 permet de décaler vers le bas les dispositifs de visée tête basse et libère un espace dans lequel on peut positionner des éléments nécessaires à une visualisation tête haute. Ces éléments comportent de manière similaire un troisième générateur d'image lumineuse 10 et une optique collimatrice et de combinaison 11 pour assurer la vision de l'image correspondante I3 renvoyée à l'infini en superposition avec la vision du paysage extérieur à partir du point d'observation O. L'axe optique du tube 10 est ainsi renvoyé vers une direction finale Z4 qui passe au point O. D'autres éléments optiques interviennent comportant un miroir de renvoi 12 pour modifier l'orientation de l'axe optique d'origine et une optique relais 13 qui effectue également un transport de l'image I3 dans un plan intermédiaire pour former l'image intermédiaire I30, ce plan correspondant au plan focal de l'obtique 11. A noter également le miroir de renvoi I14 qui modifie la direction de l'axe optique et renvoi le trajet vers l'optique collimatrice 11, laquelle est constituée de préférence par une optique holographique correspondant à un miroir sphérique. L'ensemble des miroirs 14 et 8 peut être constitué avec une seul élément, tel un prisme 15 dont les faces correspondantes sont traitées réfléchissantes et dont l'angle au sommet a la valeur désirée pour constituer les trajets optiques indiquées.

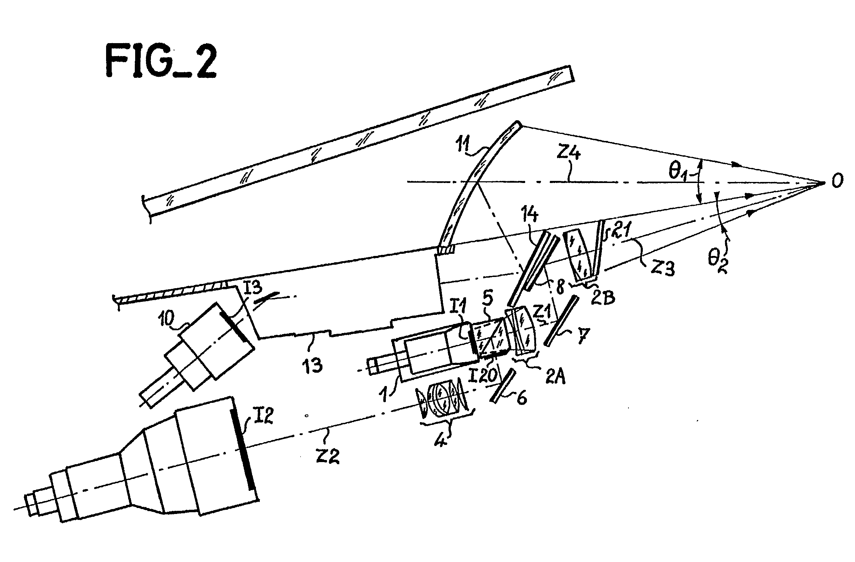

La figure 2 montre ce même montage de manière similaire mais selon une version plus représentative d'une réalisation pratique. Les mêmes éléments y sont représentés avec les mêmes repères. On y distingue l'obtique de combinaison 5 constituée par l'association de deux demi-cubes, la face diagonale les séparant étant traitée partiellement transparente en sorte de transmettre l'image I1 du tube 1 et réfléchir l'image I2 provenant du tube 2. L'un des demi-cubes est appliqué par une face sur l'écran du tube cathodique monochrome 1. De manière symétrique par rapport à la face diagonale, l'objectif relais 4 produit l'image intermédiaire I20 sur la face symétrique de l'autre demi-cube. L'optique collimatrice est formée en deux parties, une première partie 2A située entre l'optique de combinaison 5 et le miroir de renvoi 7 et une deuxième partie 2B en aval du miroir 8. Les optiques 2A et 2B ont pour direction d'axe optique respectivement les axes Z1 et Z3. Cette division de l'optique collimatrice facilite la mise en place des visualisations tête basse. L'image I20 intermédiaire est une image réduite de celle I2 formée par le tube couleur à masque 3. L'objectif collimateur 2A, 2B réalise la conjugaison optique entre la pupille de l'objectif relais 4 et l'œil de l'observateur placé au point d'observation O, de façon à minimiser le volume de l'optique relais et en sorte que les rayons lumineux entrant dans l'optique 4 sont projetés au voisinage des yeux et ne sont pas interceptés par les bords des optiques 2A, 2B, limitant au maximum le vignettage (partie des faisceaux lumineux arrêtés par les bords des lentilles) de l'image surla voie couleur.

Ainsi que représenté sur la figure 2, il est particulièrement intéressant d'assurer la juxtaposition des champs de visée entre le champ θ 1 de visualisation tête haute et le champ θ 2 de visualisation tête basse suivant lesquels on peut regarder l'image I1 collima tée ou l'image I2 collimatée, ou bien ces deux images en superposition.

Des moyens de commande annexes sont prévus pour commander la mise en marche désirée des dispositifs de visualisation tête haute et/ou tête basse. Ces moyens de commande sont symbolisés sur la figure 1 par un bloc 20 qui peut élaborer des signaux de commande S1, S2 et éventuellement S3 pour une visualisation tête haute. Ces signaux assurent la mise en service des générateurs d'images correspondant, par application des tensions d'alimentation très haute tension par exemple.

L'image monochrome présente de multiples applications opérationnelles telles que la vision du paysage sous le nez de l'avion pour faciliter l'atterrissage ou l'appontage, en continuité avec le collimateur tête haute ; la vision d'un paysage de nuit dans le cas d'une image infrarouge par un dispositif FLIR ou équivalent, la poursuite télévision dans un système de désignation d'objectif par laser,etc ....

En complément, un filtre 21 peut être disposé en aval de l'optique 2B sur le trajet allant à l'observateur pour atténuer les reflets parasites provenant de l'extérieur. Il peut s'agir d'un filtre directif, à microvolets par exemple, ou d'un filtre spectral ou interférentiel.

## Revendications

1. Système aéroporté de visualisation d'images collimatées comportant, un premier et un deuxième dispositifs de visualisation tête basse équipant la planche de bord pour visualiser une première et une deuxième images à partir respectivement d'un premier et d'un deuxième générateurs d'images lumineuses, un dispositif de visualisation tête haute (10 à 14) dont le champ de visualisation tête haute se trouve juxtaposé à celui commun de visualisation tête basse desdites première et deuxième images, un premier des dispositifs tête basse étant doté d'une optique collimatrice pour collimater la première image, caractérisé en ce que l'optique collimatrice (2) sert également à collimater la deuxième image (I2) moyennant l'utilisation d'un objectif optique relais (4) qui transporte la deuxième image et en forme une image intermédiaire (I20), une optique de combinaison du type miroir partiellement transparent (5) étant interposé sur les trajets optiques entre la première image (I1) et l'optique (2) et entre l'image intermédiaire (I20) et l'optique (2) en sorte que ces deux images sont vues chacune au foyer de l'optique collimatrice (2), ledit premier générateur (1) produisant une image vidéofréquence (I1) à haute définition et le deuxième générateur (3) produisant une image synthétique de symboles (I2) à haute résolution.

2. Système selon la revendication 1, caractérisé en ce que le premier générateur d'images lumineuses (1) utilise un tube cathodique monochrome pour produire ladite image vidéofréquence, et que le deuxième générateur d'images lumineuses (3) utilise un tube cathodique couleur pour produire ladite image synthétique de symboles.

3. Système selon la revendication 2, caractérisé en ce que le tube cathodique couleur (3) est un tube à masque.

4. Système selon l'une quelconque des revendications précédentes, caractérisé en ce que l'optique collimatrice (2) est réalisée en deux parties (2A et 2B) de manière à faciliter l'implantation des dispositifs de visualisation sur la planche de bord, une première partie (2A) étant suivie d'un premier miroir plan de renvoi (7) vers un deuxième miroir plan de renvoi (8) lequel est suivi par la deuxième partie (2B) de l'optique collimatrice.

5. Système selon l'une quelconque des revendications précédentes, caractérisé en ce que le miroir partiellement transparent (5) est formé par l'assemblage de deux moitiés de cubes, la face diagonale de séparation étant traitée partiellement transparente, la première image (I1) étant formée sur une face du cube et l'image intermédiaire (I20) étant formée sur la face symétrique par rapport à ladite face diagonale.

6. Système selon l'une quelconque des revendications précédentes, caractérisé en ce que les deux tubes cathodiques (1, 3) ont des directions (Z1, Z2) d'axe optique sensiblement parallèles et qu'un troisième miroir plan de renvoi (6) est utilisé pour renvoyer la direction d'un des ces tubes vers le miroir partiellement transparent (5).

7. Système selon l'une quelconque des revendications précédentes, caractérisé en ce qu'il comporte en outre un filtre (21) pour atténuer les reflets de sources parasites extérieures, disposé sur le trajet optique de sortie (Z3) de l'optique collimatrice (2, 2B).

8. Système selon l'une quelconque des revendications précédentes, utilisé à bord d'aéronef comme système de visualisation pour visualiser en tête basse deux images collimatées, une première image vidéo monochrome à haute définition et une deuxième image vidéo couleur susceptible de consister en une image synthétique de symboles.

**Patentansprüche**

1. Luftgestütztes Sichtanzeigesystem für kollimierte Bilder, mit einer ersten Tiefsicht-Anzeigevorrichtung sowie einer zweiten Tiefsicht-Anzeigevorrichtung, mit welchen die Bordtafel versehen ist, um ein erstes Bild sowie ein zweites Bild ausgehend aus einem ersten bzw. aus einem zweiten Leuchtbildgenerator anzuzeigen, mit einer Hochsicht-Anzeigevorrichtung (10 bis 14), deren Hochsicht-Anzeigefeld neben dem Tiefsicht-Anzeigefeld liegt, das dem ersten sowie dem zweiten Bild gemeinsam ist, wobei eine erste der Tiefsicht-Anzeigevorrichtungen mit einer Kollimatoroptik zum Kollimieren des ersten Bildes versehen ist, dadurch gekennzeichnet, daß die Kollimatoroptik (2) ebenfalls dazu dient, das zweite Bild (I2) zu kollimieren, unter Verwendung eines optischen Relais-Objektivs (4), das das zweite Bild befördert und daraus ein Zwischenbild (I20) erzeugt, wobei eine Kombinationsoptik vom Typ eines teildurchsichtigen Spiegels (5) auf den optischen Strecken zwischen dem ersten Bild (I1) und der Optik (2) und zwischen dem Zwischenbild (I20) und der Optik (2) so eingefügt ist, daß jedes dieser beiden Bilder im Brennpunkt der Kollimatoroptik (2) gesehen wird, wobei der erste Generator (1) ein hochauflösendes videofrequentes Bild (I1) und der zweite Generator (3) ein hochauflösendes synthetisches Symbolbild (I2) erzeugt.

2. System nach Anspruch 1, dadurch gekennzeichnet, daß der erste Leuchtbildgenerator (1) eine Monochrom-Kathodenstrahlröhre verwendet, um dieses videofrequente Bild zu erzeugen, und daß der zweite Leuchtbildgenerator (3) eine Farb-Kathodenstrahlröhre verwendet, um dieses synthetische Symbolbild zu erzeugen.

3. System nach Anspruch 2, dadurch gekennzeichnet, daß die Farb-Kathodenstrahlröhre (3) eine Maskenröhre ist.

4. System nach einem der vorstehenden Ansprüche, dadurch gekennzeichnet, daß die Kollimatoroptik (2) aus zwei Teilen (2A und 2B) besteht, so daß die Implantation der Anzeigevorrichtungen auf der Bordtafel erleichtert wird, wobei auf ein erstes Teil (2A) ein ebener Spiegel (7) folgt, der auf einen zweiten ebenen Umlenkspiegel (8) umlenkt, auf welchen der zweite Teil (2B) der Kollimatoroptik folgt.

5. System nach einem der vorstehenden Ansprüche, dadurch gekennzeichnet, daß der teilweise durchsichtige Spiegel (5) aus dem Zusammenbau zweier Würfelhälften besteht, wobei die diagonale Trennfläche teilweise durchsichtig behandelt wird, wobei das erste Bild (I1) auf einer Fläche des Würfels und das Zwischenbild (I20) auf der Fläche erzeugt wird, die zu dieser diagonalen Fläche symmetrisch liegt.

6. System nach einem der vorstehenden Ansprüche, dadurch gekennzeichnet, daß die beiden Kathodenstrahlröhren (1, 3) im wesentlichen parallele optische Achsen (Z1, Z2) aufweisen und daß ein dritter ebener Umlenkspiegel (6) verwendet wird, um die Richtung einer dieser Röhren auf den teildurchsichtigen Spiegel (5) umzulenken.

7. System nach einem der vorstehenden Ansprüche, dadurch gekennzeichnet, daß es ferner ein Filter (21) umfaßt, um Reflexionen der äußeren Störquellen zu dämpfen, wobei das Filter auf der optischen Austrittstrecke (Z3) der Kollimatoroptik (2, 2B) angeordnet ist.

8. System nach einem der vorstehenden Ansprüche, das als Anzeigesystem am Bord eines Flugzeuges verwendet wird, um zwei kollimierte Bilder in Tiefsicht anzuzeigen: ein erstes hochauflösendes Monochrom-Videobild sowie ein zweites Farb-Videobild, das aus einem synthetischen Symbolbild bestehen kann.

**Claims**

1. An airborne system for the visualization of collimated images comprising a first and a second device for underhead visualization equipping the panel on board in order to visualize a first and a second image produced respectively by a first and a second luminous image generator, an overhead visualization device (10 through 14) whose overhead visualization field is placed alongside the common underhead visualization device for the said first and second image, a first underhead device being provided with a collimating optical system in order to collimate the first image, characterized in that the optical collimating device (2) also functions to collimate the second image (I2) using a relay objective optical system (4) which transfers the second image and from it produces an intermediate image (I20), a combining optical system of the semi-transparent mirror type (5) being interposed on the optical paths between the first image (I1) and the optical system (2) and between the intermediate image (I20) and the optical system (2) in such a manner that these two images are each seen at the focus of the collimating optical system (2), the said first generator (1) producing a videofrequency image (I1), the said first generator with a high definition and the second generator (3) producing a synthetic image of symbols (I2) with a high resolution.

2. The system as claimed in claim 1, characterized in that the first luminous image generator (1) has a monochrome CRT in order to produce the said videofrequency image, and in that the said second luminous image generator (3) has a color CRT in order to produce the said symbol synthetic image.

3. The system as claimed in claim 2, characterized in that the color CRT (3) is a mask tube.

4. The system as claimed in any one of the preceding claims, characterized in that the collimating optical system (2) is made in two parts (2A and 2B) in such a manner as to facilitate the arrangement of the visualization devices on the panel, a first part (2A) being followed by a first plane return mirror (7) directed towards a second plane return mirror (8), same being followed by the second part (2B) of the collimating optical system.

5. The system as claimed in any one of the preceding claims, characterized in that the semitransparent mirror (5) is formed by the assembly of two halves of cubes, the diagonal border face being treated to be partly transparent, the first image (I1) being formed on one face of the cube and the intermediate image (I20) being formed on a face symmetrical in relation to the said diagonal face.

6. The system as claimed in any one of the preceding claims, characterized in that the two CRTs (1 and 2) are so arranged that the directions (Z1 and Z2) of their optical axes are generally parallel and in that a third plane return mirror (6) is used to return the direction of one of these tubes towards the semitransparent mirror (5).

7. The system as claimed in any one of the preceding claims, characterized in that it furthermore comprises a filter (21) in order to attenuate the reflections of external parasitic sources, placed on the output optical path (Z3) of the collimating optical system (2 and 2B).

8. The system as claimed in any one of the preceding claims used on board a space vehicle as a system of visualization for visualization in an underhead manner of two collimated images and a second color video image able to constitute a synthetic symbol image.

FIG_1

EP 0 194 196 B1

# FIG_2

EP 0 194 196 B1